# EUROPÄISCHE PATENTSCHRIFT

(11) **EP 1 521 061 B1**
(45) Veröffentlichungstag und Bekanntmachung des Hinweises auf die Patenterteilung: **17.05.2017**
(21) Anmeldenummer: 04020964.5
(22) Anmeldetag: 03.09.2004
(51) Int. Cl.: F25B 9/00, F25B 49/00, G01D 21/02, G01D 3/08, B60H 1/00, B60H 1/32

(54) **Sensoranordnung zur Überwachung von mindestens zwei physikalischen Grössen**
Sensor arrangement for monitoring at least two physical quantities
Ensemble de capteurs pour surveiller au moins deux grandeurs physiques

(30) Priorität: 02.10.2003 DE 10345835
(43) Veröffentlichungstag der Anmeldung: 06.04.2005
(73) Patentinhaber: Bayerische Motoren Werke Aktiengesellschaft, 80809 München (DE)
(72) Erfinder: Tille, Thomas, Dr., 81673 München (DE); Mager, Robert, Dr., 81249 München (DE); Höppler, Robert, Dr., 85123 Karlskron (DE)

(56) Entgegenhaltungen:
- DE-A1- 10 035 458
- DE-A1- 10 145 669
- US-A1- 2003 000 244
- US-A1- 2003 148 672
- US-B1- 6 250 149

## Beschreibung

Die vorliegende Erfindung betrifft eine Sensoranordnung gemäß dem Oberbegriff des Patentanspruches 1.

Eine derartige Sensoranordnung ist aus der US 6250149 B1 bekannt.

Aus der DE 100 35 458 A1 ist eine Sensoranordnung mit einem Gehäuse bekannt, in dem eine Elektronik angeordnet ist, sowie ein mit der Elektronik verbundenes erstes Sensorgerät zur Messung einer ersten physikalischen Größe und ein mit der Elektronik verbundenes zweites Sensorelement zur Messung einer zweiten physikalischen Größe, wobei die Elektronik einen Signalausgang aufweist. Zum technischen Hintergrund der vorliegenden Erfindung zählen ferner die DE 101 45 669 A1, US 2003/000244 A1 sowie die US 2003/148672 A1. Heutige, mit dem Kältemittel R134a betriebene Fahrzeugklimaanlagen weisen auf der "Hochdruckseite" nach dem Verdichter üblicherweise einen Drucksensor zur Überwachung des Betriebsdrucks und zur Steuerung einer Elektrolüfterstufe auf. Wenn der Betriebsdruck einen vorgegebenen Höchstdruck überschreitet, greift eine Regelung ein, die den Betriebsdruck z.B. durch Abschalten des Verdichters in einen "Normaldruckbereich" herunterregelt. Für zukünftige Fahrzeuggenerationen werden aus diversen Gründen voraussichtlich kohlendioxidbetriebene Fahrzeugklimaanlagen bedeutsam werden. Für die Regelung eines "C0²-Kältekreislaufs" wird der Kältemitteldruck und zusätzlich die Kältemitteltemperatur nach dem Verdichter als Signalgrößen benötigt. Der Kältemitteldruck und die Kältemitteltemperatur nach dem Verdichter sind bei "CO²Klimaanlagen" voneinander unabhängige physikalische Größen. Für die Überwachung des Kältemittelsdrucks und der Kältemitteltemperatur kann man einen Drucksensor und zusätzlich ein Temperatursensor vorsehen, die jeweils über separate elektrische Leitungen bzw. über ein Bussystem an eine Elektronik der Klimaanlage angeschlossen sind. Über den Drucksensor und den Temperatursensor können der Kältemitteldruck und die Kältemitteltemperatur gemessen, an die Elektronik weitergeleitet und dort verarbeitet werden, wobei die Elektronik ein oder mehrere "Regelorgane" des Kältekreislaufs ansteuert. Die Verwendung zweier separater Sensoren, die jeweils über separate elektrische Leitungen mit der Steuerelektronik verbunden sind und die "zentrale Verarbeitung" von zwei Signalen in der Elektronik ist mit einem hohem Verkabelungsaufwand und mit einem hohen Rechenaufwand verbunden. Nachteilig ist ferner, dass bei derartigen Anordnungen der Temperatursensor und der Drucksensor jeweils in einem separaten Gehäuse untergebracht und jeweils separat an den Fluidkreislauf der Klimaanlage angeschlossen sind, was zu Leckageproblemen führen kann.

Aufgabe der Erfindung ist es, eine kompakte und kostengünstige Sensoranordnung für die Überwachung mindestens zweier physikalischer Größen zu schaffen, insbesondere für die Überwachung eines Kältemitteldrucks und einer Kältemitteltemperatur in einer Fahrzeugklimaanlage.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Die Erfindung geht von einer Sensoranordnung, insbesondere für Fahrzeugklimaanlagen aus, bei der ein erstes Sensorelement zur Messung einer ersten physikalischen Größe und zweites Sensorelement zur Messung einer zweiten physikalischen Größe vorgesehen ist. Bei der ersten physikalischen Größe kann es sich um einen Kältemitteldruck und bei der zweiten physikalischen Größe kann es sich um eine Kältemitteltemperatur handeln. Die beiden Sensorelemente sind in einem gemeinsamen Gehäuse untergebracht, das unmittelbar an den Fluidkreislauf einer Fahrzeugklimaanlage angeschlossen werden kann. Für die beiden Sensorelemente benötigt man also nur eine einzige "Anschlussstelle" an den Fluidkreislauf, was die Gefahr von Leckagen minimiert. Dadurch reduziert sich im Vergleich zu separaten Sensorelementen auch das Gewicht und die Anzahl einzelner Komponenten. Wesentlich ist ferner, dass es sich bei der Sensoranordnung um eine "intelligente Sensoranordnung" handelt. "Intelligent" bedeutet in diesem Zusammenhang, dass die beiden Sensorelemente an eine im oder unmittelbar am Gehäuse der Sensoranordnung angeordnete Elektronik angeschlossen sind, die eine "Auswertung" bzw. "Vorverarbeitung" der Sensorsignale vornimmt und die ein "ausgewertetes" Signal auf einen Signalausgang der Sensoranordnung schaltet. Der Signalausgang ist über eine elektrische Leitung bzw. über ein Bussystem mit einer separiert von der Sensoranordnung angeordneten Steuerelektronik der Fahrzeugklimaanlage verbunden.

Der Kern der Erfindung besteht in einem in die Elektronik integrierten bzw. dort softwaremäßig hinterlegten "Auswertemodul", das in Abhängigkeit von gemessenen "Momentanwerten" der physikalischen Größen gemäß einer vorgegebenen Auswahllogik eine der beiden gemessenen physikalischen Größen als "momentan relevante Größe" ermittelt und ein der momentan relevanten physikalischen Größe entsprechendes elektrisches Sensorausgangssignal auf den Signalausgang der Sensoranordnung schaltet bzw. auf Basis der "momentan relevanten Größe" ein elektrisches Sensorausgangssignal bildet und dieses auf den Signalausgang der Sensoranordnung schaltet.

Mit einer Sensoranordnung gemäß der Erfindung können also gleichzeitig zwei physikalische Größen "überwacht" werden. Die "Sensorelektronik", an welche die beiden Sensorelemente angeschlossen sind, selektiert in Abhängigkeit von den momentanen Messwerten und der implementierten Auswahllogik das momentan als "relevant" bzw. das momentan als "kritisch" anzusehende Messsignal und schaltet dem Sensorsignalausgang ein auf Basis des momentan relevanten bzw. kritischen Signals gebildetes Sensorsignal auf. Im Vergleich zu herkömmlichen Systemen, bei denen zwei Sensoren jeweils separat mit der zentralen Steuerelektronik der Fahrzeugklimaanlage verdrahtet sind, halbiert sich hier der Verdrahtungsaufwand. Außerdem reduziert sich die im zentralen Steuergerät der Fahrzeugklimaanlage zu verarbeitende Datenmenge, da von der "vorgelagerten" Sensorelektronik nur das momentan relevante Messsignal an die Steuerelektronik der Fahrzeugklimaanlage "weitergeleitet" bzw. nur ein auf Basis des momentan relevanten Messsignals gebildetes elektrisches Sensorsignal an die zentrale Steuerelektronik weitergeleitet wird.

Wie bereits erwähnt kann die Sensoranordnung eine kombinierte Druck-/Temperatursensoranordnung sein. Das Gehäuse der kombinierten Druck-/Temperatursensoranordnung enthält eine Drucksensorik und eine Temperatursensorik sowie die Sensorelektronik zur Auswertung der Sensorsignale und zur "Konditionierung" des Ausgangssignals. Das elektrische Ausgangssignal des Sensors repräsentiert grundsätzlich ein Drucksignal, welches ggf. bestimmte Informationen eines Temperatursignals durch entsprechende Umsetzung in ein "äquivalentes Drucksignal" beinhaltet, was später noch näher erläutert wird.

Es wird ausdrücklich darauf hingewiesen, dass die Erfindung nicht auf eine Sensoranordnung mit zwei Sensorelementen beschränkt ist. Die Sensoranordnung kann auch mehr als zwei Sensorelemente aufweisen, die jeweils eine physikalische Größe messen, wobei das Auswertemodul dann aus den mehr als zwei physikalischen Größen gemäß einer entsprechenden Auswahllogik die momentan relevante Größe ermittelt und auf Basis der momentan relevanten Größe das Sensorausgangssignal bildet.

Im Folgenden wird die Erfindung im Zusammenhang mit der Zeichnung näher erläutert. Es zeigen:
- Figuren 1 - 3: Verschiedene Schaltungsanordnungen einer Fahrzeugklimaanlage, die mit einer Sensoranordnung gemäß der Erfindung ausgestattet ist;
- Figuren 4a - 11a: verschiedene Messsignalverläufe;
- Figuren 4b - 11b: den Figuren 4a - 11a zugeordnete Sensorsignalverläufe.

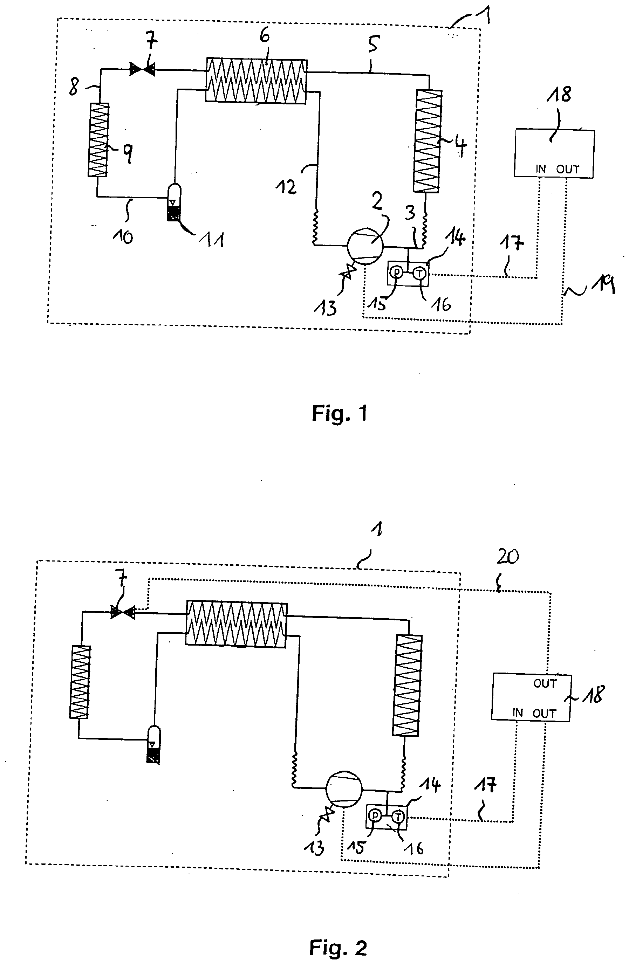

Figur 1 zeigt eine Fahrzeugklimaanlage 1 mit einem Kältemittelverdichter 2, der hochdruckseitig über eine Fluidleitung 3 mit einem Gaskühler 4 verbunden ist. Der Gaskühler 4 ist über eine Fluidleitung 5 und einen inneren Wärmetauscher 6 mit einem Expansionsorgan 7 verbunden. Expandiertes Kältemittel strömt vom Expansionsorgan 7 über eine Fluidleitung 8 zu einem Verdampfer 9 und von dort über eine Fluidleitung 10 zu einem Sammler 11. Vom Sammler 11 strömt Kältemittel zurück über den inneren Wärmetauscher 6 zu einer Fluidleitung 12, die mit der Saugseite des Kältemittelverdichters 2 verbunden ist. Am Kältemittelverdichter 2 ist ein Druckentlastungsorgan 13 vorgesehen, über das Überdruck abgelassen werden kann.

An die Fluidleitung 3 ist ein Gehäuse einer Sensoranordnung 14 angeschlossen, die einen Drucksensor 15, einen Temperatursensor 16 und eine Sensorelektronik (nicht dargestellt) aufweist, an die die beiden Sensoren 15, 16 angeschlossen sind. Die Sensoranordnung 14 weist einen elektrischen Signalausgang auf, der über eine Signalleitung 17 mit einer Steuerelektronik 18 verbunden ist. Ein Steuerausgang der Steuerelektronik 18 ist mit dem Kältemittelverdichter 2 verbunden. Die Steuerelektronik 18 steuert u.a. in Abhängigkeit des Kältemitteldrucks und der Kältemitteltemperatur in der Fluidleitung 3 den Kältemittelverdichter 2 an.

Figur 2 zeigt im Wesentlichen den gleichen Kältemittelkreislauf 1 wie Figur 1. Zusätzlich ist jedoch im Ausführungsbeispiel der Figur 2 das Expansionsorgan 7 elektrisch ansteuerbar und über eine elektrische Leitung 20 mit einem weiteren Steuerausgang der Steuerelektronik 18 verbunden.

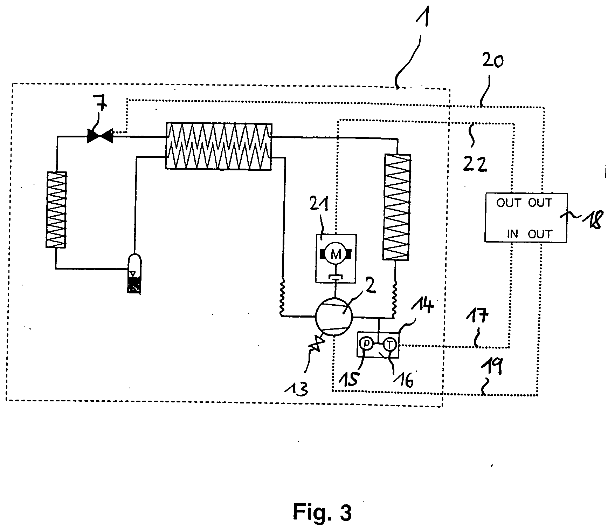

Figur 3 zeigt ein Ausführungsbeispiel eines Kältekreislaufs 1, bei dem zusätzlich eine Magnetkupplung 21 vorgesehen ist, über die der Kältemittelverdichter 2 bei Auftreten kritischer Betriebszustände abgeschaltet (Cut-Off) werden kann. Die Steuerelektronik 18 weist bei diesem Ausführungsbeispiel einen weiteren Steuerausgang auf, der über eine elektrische Steuerleitung 22 mit der Magnetkupplung 21 des Kältemittelverdichters 2 verbunden ist. Im Übrigen entspricht das Ausführungsbeispiel dem Ausführungsbeispiel der Figur 1 bzw. 2.

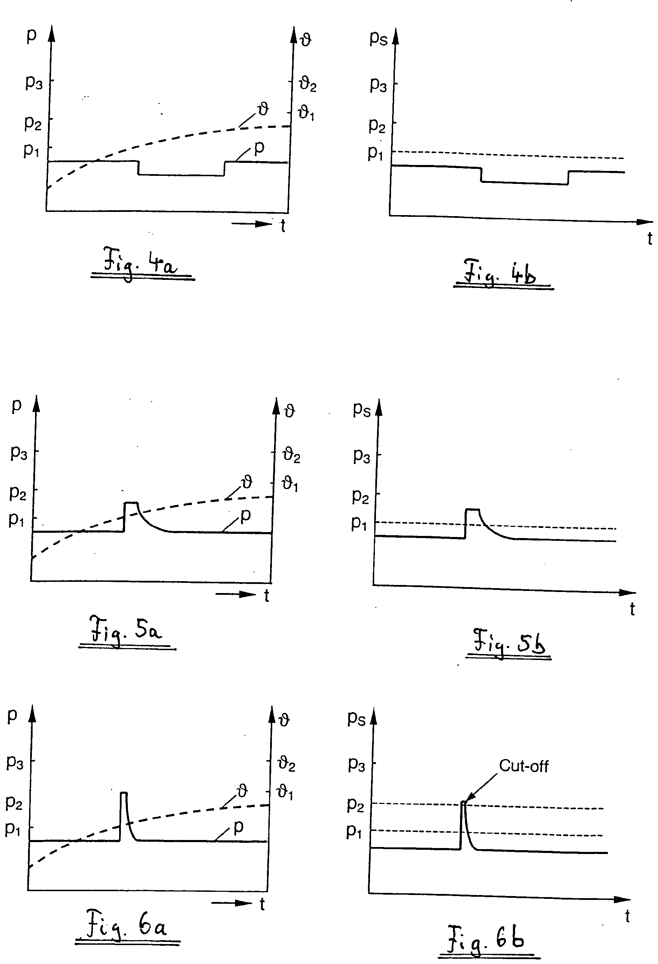

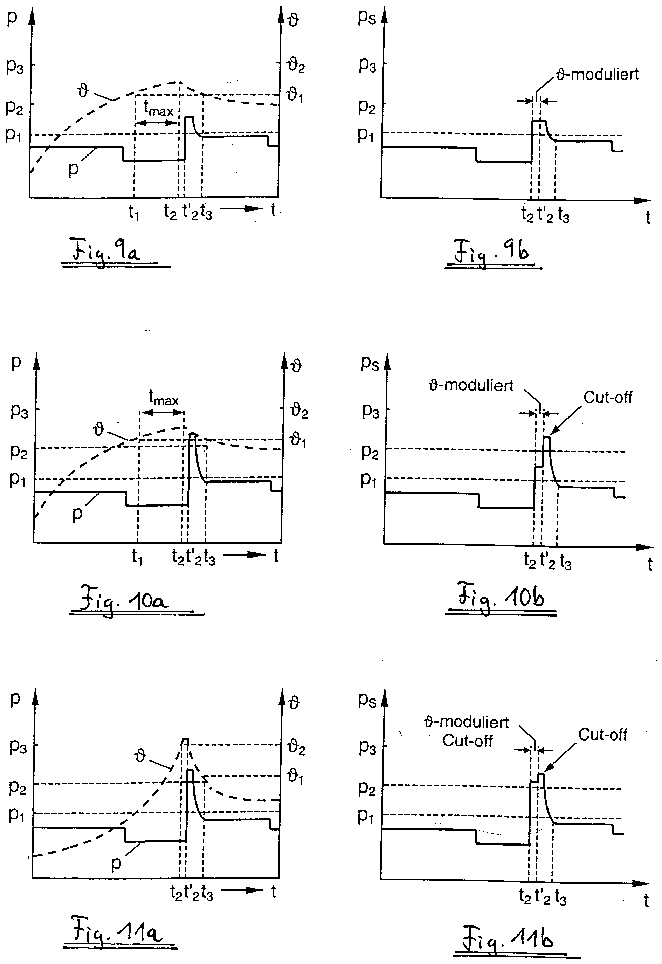

Im Folgenden wird die Funktionsweise der in den Figuren 1 - 3 dargestellten Kältemittelkreisläufe 1, insbesondere der Sensoranordnungen 14 der Kältemittelkreisläufe 1 im Zusammenhang mit den Figuren 4a, 11a und 4b - 11b näher erläutert.

In den Diagrammen der Figuren 4a - 11a sind beispielhaft jeweils ein Betriebsdruckverlauf p und ein Temperaturverlauf ϑ des Kältemittels in der Fluidleitung 3 (vgl. Fig. 1 - 3) dargestellt. In den Figuren 4b - 11b ist jeweils der zugeordnete Verlauf des am Signalausgang bzw. an der elektrischen Leitung 17 (vgl. Fig. 1 - 3) anliegenden elektrischen Signals dargestellt. Das am Signalausgang der Sensoranordnung 14 anliegende elektrische Signal ist in den Diagrammen 4b - 11b mit pₛ bezeichnet. Wenn der gemessene Kältemitteldruck von der Sensorelektronik als der momentan relevante Betriebsparameter ermittelt wird, kann das elektrische Signal pₛ als "Drucksignal" interpretiert werden. Wenn hingegen die gemessene Kältemitteltemperatur von der Sensorelektronik als der momentan relevante Betriebsparameter ermittelt wird, kann das elektrische Signal pₛ als "Temperatursignal" bzw. als ein auf Basis der gemessenen Kältemitteltemperatur gebildetes "äquivalentes Drucksignal" interpretiert werden, was im Folgenden noch näher erläutert wird.

In CO₂-Kältemittelkreisläufen, wie sie in den Figuren 1 - 3 dargestellt sind, wird der zulässige dauerhafte Betriebsdruck, d.h. der Betriebsdruck, der über eine längere Zeitdauer im Kältemittelkreislauf auftreten darf, üblicherweise auf einen vorgegebenen Betriebsdruck p₁ begrenzt, der im Folgenden auch als "unterer Druckgrenzwert" bezeichnet wird. Der zulässige dauerhafte Betriebsdruck p₁ kann beispielsweise 133 bar betragen. Überschreitungen des unteren Druckgrenzwerts p₁ bzw. des zulässigen Betriebsdrucks p₁ werden bis zu einem oberen Grenzdruckwert p₂ toleriert, dahingehend, dass lediglich die Kälteleistung des Kältekreislaufs heruntergeregelt wird. Der obere Grenzdruckwert p₂ kann beispielsweise 140 bar betragen. Sollte der Betriebsdruck noch weiter ansteigen, so kann vorgesehen sein, dass bei einem Entlastungsdruck von z.B. p₃ = 170 bar das Entlastungsorgan 13 öffnet und zumindest einen Teil des im Kältemittelkreislaufs enthaltenen Kältemittels in die Umgebung abbläst, was als absoluter Notfall angesehen wird.

In Figur 4a sind der untere Grenzdruckwert p₁, der obere Grenzdruckwert p₂ und der Druck p₃ eingezeichnet, bei dem das Entlastungsorgan 14 (vgl. Fig. 1 - 3) öffnet. Ferner ist ein erster beispielhafter Betriebsdruckverlauf p eingezeichnet, wobei der Betriebsdruckverlauf p in Figur 4a stets kleiner als der untere Grenzdruckwert p₁ ist.

Ferner sind ein unterer Temperaturgrenzwert ϑ₁ und ein oberer Temperaturgrenzwert ϑ₂ eingezeichnet. Mit gestrichelter Linie ist der Verlauf der Kältemitteltemperatur dargestellt, die in Figur 4a stets kleiner als der untere Temperaturgrenzwert ϑ₁ ist.

Kältemitteltemperaturen, die kleiner als ϑ₁ sind, d.h. die kleiner als der untere Temperaturgrenzwert sind, werden stets als "unkritisch" angesehen. Wenn die vom Temperatursensor 16 (vgl. Fig. 1 - 3) gemessene Kältemitteltemperatur kleiner als der untere Temperaturgrenzwert ϑ₁ ist, liefert die Sensoranordnung 14 am elektrischen Signalausgang stets ein auf Basis des momentanen Druckverlaufs p gebildetes elektrisches Signal pₛ. In Betriebszuständen, in denen die Betriebstemperatur "unkritisch" ist, wird von der Sensoranordnung 14 also stets das "Drucksignal" bzw. ein auf Basis des Drucksignals gebildetes elektrisches Signal pₛ als "Führungsgröße" an die Steuerelektronik 18 übertragen.

Figur 5a zeigt eine weitere Situation, bei der die gemessene Kältemitteltemperatur ϑ stets kleiner als der untere Temperaturgrenzwert ϑ₁ und somit unkritisch ist. Der gemessene Kältemitteldruck p weist vorübergehend einen Anstieg in den Druckbereich p₁ ≤ p ≤ p₂ auf. Wenn, wie in Figur 5a dargestellt, der Betriebsdruck in dem Bereich zwischen p₁ und p₂ liegt, d.h. wenn der untere Druckgrenzwert p₁ überschritten und die Betriebstemperatur 9 unkritisch (kleiner als der untere Temperaturgrenzwert ϑ₁) ist, so wird von der Sensoranordnung 14, wie in Figur 5b dargestellt, ebenfalls ein auf Basis des gemessenen Druckverlaufs gebildetes elektrisches Signal pₛ ausgegeben und der Steuerelektronik 18 (Fig. 1 - 3) zugeführt.

Da der untere Druckgrenzwert p₁ überschritten ist, steuert bzw. regelt die Steuerelektronik 18 die Leistung des Kältemittelverdichters 2 herab, so dass der Betriebsdruck p wieder unter den unteren Druckgrenzwert p₁ absinkt und der Kältekreislauf 1 wieder im Normaldruckbereich p < p₁ arbeitet. Alternativ oder ergänzend dazu kann vorgesehen sein, dass die Steuerelektronik 18 bei Überschreiten des unteren Druckgrenzwerts p₁ ein extern ansteuerbares Expansionsorgan 7, wie es in den Ausführungsbeispielen der Figuren 2 und 3 gezeigt ist, ansteuert, wodurch der Betriebsdruck ebenfalls abgesenkt werden kann.

Figur 6 zeigt eine Situation, in der die Kältemitteltemperatur ϑ ebenfalls wieder kleiner als der untere Temperaturgrenzwert ϑ₁ ist. Der Betriebsdruck p steigt hier kurzzeitig über den oberen Druckgrenzwert p₂ an. Auch hier ist der Betriebsdruck als kritische bzw. relevante Messgröße anzusehen, so dass die Sensoranordnung 14 auch hier ein auf Basis des gemessenen Betriebsdrucks p gebildetes elektrisches Signal pₛ an die Steuerelektronik 18 liefert. Da der obere Druckgrenzwert p₂ überschritten wird, regelt die Steuerelektronik 18 den Kältemittelverdichter 2 vollständig ab, was im Folgenden auch als "Cut-Off" bezeichnet wird. Das Abregeln bzw. Abschalten des Kältemittelverdichters kann beispielsweise, wie in Figur 3 dargestellt, über eine Magnetkupplung 21 erfolgen, die in solchen Situationen geöffnet wird und den Antrieb des Kältemittelverdichters 2 von einer Antriebswelle (nicht dargestellt) trennt. Durch Abschalten des Kältemittelverdichters 2 sinkt der Betriebsdruck p im Kältekreislauf 1 schnell unter die "Sicherheitsschwelle" p₂ und schließlich auch wieder in den Normaldruckbereich, d.h. unter den unteren Grenzdruckwert p₁. Bei nur geringfügigen Überschreitungen des oberen Grenzwertdruckwerts p₂ ist also ein Öffnen des Druckentlastungsorgans 13 nicht erforderlich. "Geringfügig" bedeutet hier, dass der Betriebsdruck p noch kleiner als der Druck p₃ ist.

Bei den oben erläuterten Betriebszuständen lag die Kältemitteltemperatur stets im Normalbereich, d.h. unterhalb des unteren Temperaturgrenzwerts θ₁, was zur Folge hatte, dass stets der Betriebsdruck als relevante Größe angesehen wurde und stets ein auf Basis des gemessenen Betriebsdrucks gebildetes elektrisches Signal p₁ am Signalausgang der Sensoranordnung 14 anlag.

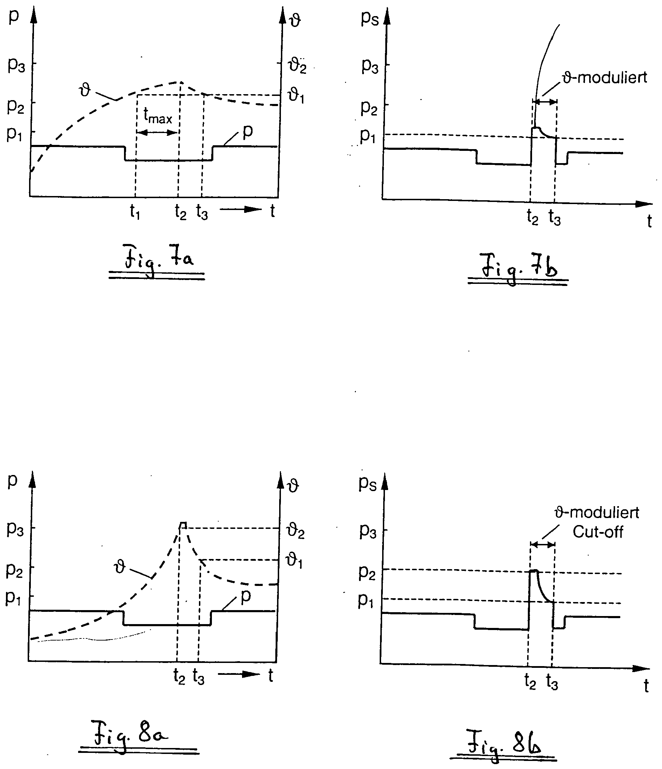

Im Folgenden werden Situationen erläutert, in denen die Kältemitteltemperatur über den "Normaltemperaturbereich" ansteigt. Bei CO₂-Klimaanlagen sollte die Betriebstemperatur ϑ des Kältemittels nach dem Kältemittelverdichter 2 und vor dem Gaskühler 4 (vgl. Fig. 1) unterhalb des unteren Temperaturgrenzwerts ϑ₁ liegen. Der untere Temperaturgrenzwert ϑ₁ kann beispielsweise 165°C betragen. Ferner kann vorgesehen sein, dass für einen vorgegebenen maximalen Zeitraum von tₘₐₓ= t₂ - t₁ (vgl. Fig.7a) eine Überschreitung des unteren Temperaturgrenzwerts ϑ₁ toleriert wird, ohne dass ein "temperaturbedingter" Regeleingriff erfolgt. Der "maximale Zeitraum" tₘₐₓ kann beispielsweise 300 Sekunden betragen. Toleriert wird ein zeitlich begrenztes Überschreiten des unteren Temperaturgrenzwerts ϑ₁ jedoch nur, wenn die Kältemitteltemperatur ϑ kleiner als der obere Temperaturgrenzwert ϑ₂ ist, der z.B. auf 180°C festgelegt sein kann. Wenn also die Betriebstemperatur für eine Zeitdauer von weniger als tₘₐₓ im Bereich zwischen ϑ₁ und ϑ₂ liegt, und anschließend wieder unter den unteren Temperaturgrenzwert ϑ₁ abfällt, wird wie bei den oben erläuterten Betriebszuständen ein auf Basis des gemessenen Betriebsdrucks gebildetes elektrisches Signal pₛ an die Steuerelektronik 18 übertragen.

Überschreitet die Kältemitteltemperatur ϑ den oberen Temperaturgrenzwert ϑ₂ oder liegt die Kältemitteltemperatur ϑ für eine Zeitdauer, die länger als die vorgegebene maximale Zeitdauer tₘₐₓ ist, in einem Temperaturbereich zwischen ϑ₁ und ϑ₂, so wird, wenn, wie in Figur 7a dargestellt, der Betriebsdruck p im Normaldruckbereich (unterhalb von p₁) liegt, ab dem Zeitpunkt t₂, d.h. nach Verstreichen der maximalen Zeitdauer tₘₐₓ die Betriebstemperatur des Kältemittels als kritische bzw. relevante Messgröße angesehen.

Folglich wird, wie in Figur 7b dargestellt, ab dem Zeitpunkt t₂ ein auf Basis der Kältemitteltemperatur ϑ gebildetes elektrisches Signal pₛ an die Steuerelektronik 18 übertragen. Da also die Kältemitteltemperatur für eine Zeitdauer, die länger als tₘₐₓ ist, den unteren Temperaturgrenzwert ϑ₁ überschreitet, regelt die Steuerelektronik 18 den Kältemittelverdichter 2 und/oder, sofern vorhanden, ein extern ansteuerbares Expansionsorgan 7 (vgl. Fig. 2, 3) so "zurück", dass die Kältemitteltemperatur ϑ unter den unteren Temperaturgrenzwert ϑ₁ absinkt. Im Zeitpunkt t₃ (Fig. 7a) unterschreitet die Kältemitteltemperatur ϑ den unteren Temperaturgrenzwert ϑ₁. Das "Auswertemodul" der Sensoranordnung 14, das softwaremäßig hinterlegt sein kann, selektiert vom Zeitpunkt t₃ an wieder das Drucksignal als relevantes bzw. kritisches Signal, so dass, wie in Figur 7b dargestellt, ab dem Zeitpunkt t₃ das am Signalausgang anliegende elektrische Signal pₛ wieder auf Basis des gemessenen Betriebsdrucks p gebildet wird.

Die Kältemitteltemperatur ϑ und der Kältemitteldruck p im Kältekreislauf 1 verhalten sich unabhängig voneinander. Wie in Figur 7a dargestellt, kann es auch bei einem normalen Betriebsdruck zu sehr hohen Kältemitteltemperaturen kommen, z.B. bei einer "Unterfüllung" des Systems oder bei hohen Lastpunkten.

Solange also die Temperatur ϑ des Kältemittels unterhalb des unteren Temperaturgrenzwerts ϑ₁ liegt, gibt die Sensoranordnung 14 stets ein auf Basis des Betriebsdrucks p gebildetes elektrisches Signal pₛ aus. Eine "Verrechnung" mit der Betriebstemperatur ϑ bzw. eine Berücksichtigung der Betriebstemperatur ϑ erfolgt also nicht.

Figur 8 zeigt eine Situation, in der sich der Betriebsdruck p des Kältemittels im Normalbereich, d.h. unterhalb des unteren Druckgrenzwerts p₁ befindet. Die Kältemitteltemperatur ϑ steigt wesentlich schneller als in Figur 7a dargestellt an und überschreitet im Zeitpunkt t₂ den oberen Temperaturgrenzwert ϑ₂. Der Temperaturanstieg ist so schnell, dass die Zeitdauer für den Temperaturanstieg von ϑ₁ auf ϑ₂ kürzer als tₘₐₓ ist. Ein "Zeit-Temperatur-bedingter Regeleingriff' erfolgt also nicht. Aufgrund der Überschreitung des oberen Temperaturgrenzwerts ϑ₂ erfolgt im Zeitpunkt t₂ ein rein temperaturbedingter Regeleingriff.

Dies spiegelt sich im Sensorsignal pₛ (Fig. 8b) wieder. Bis zum Zeitpunkt t₂ wird das Drucksignal als relevantes bzw. kritisches Signal angesehen. Aufgrund des Überschreitens des oberen Temperaturgrenzwerts ϑ₂ im Zeitpunkt t₂ wird ab dem Zeitpunkt t₂ das Temperatursignal als relevantes bzw. kritisches Signal angesehen. Dementsprechend wird ab dem Zeitpunkt t₂ das von der Sensoranordnung 14 an die Steuerelektronik 18 gelieferte elektrische Signal pₛ auf Basis der Kältemitteltemperatur ϑ gebildet. Da die Kältemitteltemperatur ϑ den oberen Temperaturgrenzwert ϑ₂ überschreitet, regelt die Steuerelektronik 18 den Kältemittelverdichter 2 zurück oder schaltet ihn vollständig ab (Cut-Off). Alternativ oder ergänzend dazu kann vorgesehen sein, dass, sofern vorhanden, die Steuerelektronik 18 auch ein extern ansteuerbares Expansionsorgan 7 (Fig. 2, 3) entsprechend ansteuert. Durch den Regeleingriff der Steuerelektronik 18 sinkt die Kältemitteltemperatur ϑ ab und unterschreitet im Zeitpunkt t₃ den unteren Temperaturgrenzwert ϑ₁.

Ab dem Zeitpunkt t₃ befindet sich die Kältemitteltemperatur wieder im Normaltemperaturbereich. Folglich wird, wie in Figur 8b dargestellt, ab dem Zeitpunkt t₃ der Betriebsdruck wieder als relevante bzw. kritische Betriebsgröße angesehen und das von der Sensoranordnung 14 geliefert elektrische Signal pₛ wird ab dem Zeitpunkt t₃ wieder auf Basis des Betriebsdrucks p gebildet.

Figur 9a zeigt eine Situation, bei der der Betriebsdruck p des Kältemittels bis zu einem Zeitpunkt t'₂ im Normalbereich, d.h. unterhalb von p₁ bleibt. Die Kältemitteltemperatur ϑ überschreitet im Zeitpunkt t₁ den unteren Temperaturgrenzwert ϑ₁ und steigt weiter an. Bis zum Zeitpunkt t₂ wird, wie aus Figur 9b ersichtlich ist, der Betriebsdruck p als relevantes bzw. kritisches Signal angesehen. Im Zeitpunkt t₂ hat die Kältemitteltemperatur für eine Zeitdauer von tₘₐₓ den unteren Temperaturgrenzwert überschritten. Folglich wird vom Zeitpunkt t₂ an die Kältemitteltemperatur als das relevante bzw. kritische Signal angesehen, was sich in Figur 9b durch einen sprunghaften Anstieg des Signals pₛ widerspiegelt. Im Zeitraum zwischen t₂ und t'₂ wird also das von der Sensoranordnung 14 ausgegebene elektrische Signal auf Basis des Temperatursignals gebildet. Dabei muss nicht unbedingt der Signalverlauf des Temperatursignals "nachgebildet" werden. Es genügt, wie in Figur 9b dargestellt, dass das elektrische Signal pₛ oberhalb eines vorgegebenen kritischen Werts liegt und z.B. konstant gehalten wird.

Im Zeitpunkt t'₂ steigt zusätzlich der Betriebsdruck p des Kältemittels auf einen Wert an, der zwischen dem unteren Druckgrenzwert p₁ und dem oberen Druckgrenzwert p₂ liegt. Dies hat zur Folge, dass ab dem Zeitpunkt t'₂ der Kältemitteldruck als die relevante bzw. kritische Größe angesehen wird und das elektrische Signal pₛ dem gemessenen Kältemitteldruck p nachgebildet wird. Im Zeitraum zwischen t₂ und t'₂ erfolgt also zunächst eine "Verrechnung" des Drucksignals mit dem Temperatursignal in ein äquivalentes Drucksignal. Ab dem Zeitpunkt t'₂ wird das elektrische Signal pₛ ohne Verrechnung des Temperatursignals dem Drucksignal p "nachgebildet".

Analog zu den obigen Erläuterungen erfolgt bei einer Situation, wie sie in Figur 9a dargestellt ist, ab dem Zeitpunkt t₂ ein Regeleingriff, d.h. eine Abregelung des Kältemittelverdichters 2 und/oder eine entsprechende Ansteuerung des Expansionsorgans 7.

Figur 10a zeigt eine Situation, bei der der Kältemitteldruck bis zum Zeitpunkt t'₂ im Normalbereich, d.h. unterhalb des unteren Druckgrenzwerts p₁ bleibt. Die Kältemitteltemperatur steigt zunächst stetig an und überschreitet im Zeitpunkt t₁ den unteren Temperaturgrenzwert ϑ₁. Anschließend steigt die Temperatur weiter an. Nach einer Zeitdauer tₘₐₓ wird die Kältemitteltemperatur als das kritische bzw. relevante Signal angesehen. Wie aus Figur 10b ersichtlich ist, wird bis zum Zeitpunkt t₂ das elektrische Signal pₛ auf Basis des gemessenen Betriebsdrucks p gebildet. Ab dem Zeitpunkt t₂, d.h. nach Ablauf der Zeitdauer tₘₐₓ wird zunächst die Kältemitteltemperatur als das kritische bzw. relevante Signal angesehen, was sich in einem entsprechenden Anstieg des Signals pₛ auf einen Wert, der zwischen p₂ und p₁ liegt, widerspiegelt.

Wie aus Figur 10a ersichtlich ist, steigt im Zeitpunkt t'₂ der Kältemitteldruck auf einen Wert oberhalb des oberen Druckgrenzwerts p₂ an. Aufgrund des Überschreitens des oberen Druckgrenzwerts p₂ wird ab dem Zeitpunkt t'₂ der Betriebsdruck als das relevante bzw. kritische Signal angesehen, was sich in Figur 10b in einem weiteren Anstieg des Signals pₛ widerspiegelt. Ab dem Zeitpunkt t₂ erfolgt bereits ein erster Regeleingriff der Steuerelektronik 18, wobei vorgesehen sein kann, dass zwischen t₂ und t'₂ zunächst die Leistung des Kältemittelverdichters herabgesenkt wird und im Zeitpunkt t'₂ aufgrund des Überschreitens des oberen Druckgrenzwerts p₂ der Kältemittelverdichter 2 vollständig abgeschaltet wird (Cut-Off). Dies führt dann, wie aus Figur 10a ersichtlich ist, zu einem relativ schnellen Absinken des Kältemitteldrucks in den Normalbereich. Auch die Kältemitteltemperatur ϑ sinkt in den Normalbereich unterhalb von ϑ₁ ab.

Figur 11a zeigt eine Situation, in der der Betriebsdruck p bis zum Zeitpunkt t'₂ im Normalbereich, d.h. unterhalb des unteren Druckgrenzwerts p₁ bleibt. Die Kältemitteltemperatur 9 hingegen steigt relativ schnell an und überschreitet im Zeitpunkt t₂ den oberen Temperaturgrenzwert ϑ₂. Bis zum Zeitpunkt t₂ wird der Kältemitteldruck p als die relevante bzw. kritische Größe angesehen. Da im Zeitpunkt t₂ die Kältemitteltemperatur ϑ den oberen Druckgrenzwert ϑ₂ überschreitet, wird ab dem Zeitpunkt t₂ die Kältemitteltemperatur ϑ als die relevante bzw. kritische Größe angesehen. Folglich wird, wie in Figur 11b dargestellt, ab dem Zeitpunkt t₂ das von der Sensoranordnung 14 an die Steuerelektronik 18 gelieferte elektrische Signal pₛ auf Basis der Kältemitteltemperatur ϑ gebildet. Im Zeitpunkt t₂ erfolgt also ein rein temperaturbedingtes Abschalten des Kältemittelverdichters 2 bzw. ein rein temperaturbedingtes Abregeln des Kältemittelverdichters 2. Im Zeitpunkt t'₂ erfolgt ein Anstieg des Kältemitteldrucks p auf einen Wert oberhalb des oberen Druckgrenzwerts p₂. Ab dem Zeitpunkt t'₂, in welchem der Kältemitteldruck den oberen Druckgrenzwert p₂ überschreitet, wird also der Kältemitteldruck wieder als das relevante bzw. kritische Signal angesehen. Folglich wird vom Zeitpunkt t'₂ an das von der Sensoranordnung 14 gelieferte elektrische Signal pₛ wieder dem Kältemitteldruck p nachgebildet.

## Patentansprüche

1. Sensoranordnung (14), insbesondere für Fahrzeugklimaanlagen (1), mit einem Gehäuse, in dem eine Elektronik, ein mit der Elektronik verbundenes erstes Sensorelement (15) zur Messung einer ersten physikalischen Größe (p) und ein mit der Elektronik verbundenes zweites Sensorelement (16) zur Messung einer zweiten physikalischen Größe (*ϑ*) angeordnet sind, wobei die Elektronik einen elektrischen Signalausgang (17) und ein Auswertemodul aufweist,
**dadurch gekennzeichnet, dass**
• die Sensoranordnung (14) eine Sensoranordnung einer Fahrzeugklimaanlage (1) ist,
• das Auswertemodul in Abhängigkeit von momentanen Messwerten der physikalischen Größen (p, *ϑ*) gemäß einer vorgegebenen Auswahllogik ermittelt, welche der gemessenen physikalischen Größen (p, *ϑ*) als momentan relevante Größe anzusehen ist und das ein auf Basis der momentan relevanten Größe (p, *ϑ*) gebildetes Sensorsignal (pₛ) auf den Signalausgang (17) schaltet und
• die zweite physikalische Größe eine Temperatur (*ϑ*) und das zweite Sensorelement (16) ein Temperatursensor ist, der zur Messung einer Kältemitteltemperatur (*ϑ*) der Fahrzeugklimaanlage (1) vorgesehen ist.

2. Sensoranordnung (14) nach Anspruch 1, wobei die erste physikalische Größe ein Druck (p) und das erste Sensorelement (15) ein Drucksensor ist, das zur Messung eines Kältemitteldrucks der Fahrzeugklimaanlage (1) vorgesehen ist.

3. Sensoranordnung (14) nach einem der Ansprüche 1 oder 2, wobei die beiden physikalischen Größen (p, *ϑ*) unabhängig voneinander sind.

4. Sensoranordnung (14) nach einem der Ansprüche 1 bis 3, wobei stets ein auf Basis der ersten physikalischen Größe (p) gebildetes Sensorsignal (pₛ) auf den Signalausgang (17) geschaltet wird, wenn die gemessene zweite physikalische Größe (*ϑ*) kleiner ist als ein vorgegebener unterer Grenzwert (*ϑ*₁) für die zweite physikalische Größe (*ϑ*).

5. Sensoranordnung (14) nach einem der Ansprüche 1 bis 4, wobei ein auf Basis der zweiten physikalischen Größe (*ϑ*) gebildetes Sensorsignal (pₛ) auf den Signalausgang (17) geschaltet wird, wenn die erste physikalische Größe (p) kleiner ist als ein vorgegebener unterer Grenzwert (p₁) für die erste physikalische Größe und wenn die zweite physikalische Größe (*ϑ*) für mindestens eine vorgegebene Zeitdauer (tₘₐₓ) größer ist als ein vorgegebener unterer Grenzwert (*ϑ*₁) für die zweite physikalische Größe (*ϑ*).

6. Sensoranordnung (14) nach einem der Ansprüche 1 bis 5, wobei ein auf Basis der zweiten physikalischen Größe (*ϑ*) gebildetes Sensorsignal (pₛ) auf den Signalausgang (17) geschaltet wird, wenn die erste physikalische Größe (p) kleiner ist als ein vorgegebener unterer Grenzwert (p₁) für die erste physikalische Größe und wenn die zweite physikalische Größe (*ϑ*) größer ist als ein vorgegebener oberer Grenzwert (*ϑ*₂) für die zweite physikalische Größe (*ϑ*).

7. Sensoranordnung (14) nach einem der Ansprüche 1 bis 6, wobei ein auf Basis der ersten physikalischen Größe (p) gebildetes Sensorsignal (pₛ) auf den Signalausgang (17) geschaltet wird, wenn die erste physikalische Größe (p) größer ist als ein vorgegebener unterer Grenzwert (p₁) für die erste physikalische Größe (p) und wenn die zweite physikalische Größe (*ϑ*) kleiner ist als ein vorgegebener oberer Grenzwert (*ϑ*₂) für die zweite physikalische Größe (*ϑ*).

8. Sensoranordnung (14) nach einem der Ansprüche 1 bis 7, wobei das Gehäuse der Sensoranordnung (14) an eine Fluidleitung (3) der Fahrzeugklimaanlage (1) angeschlossen ist und den Druck (p) und die Temperatur (*ϑ*) eines in der Fluidleitung (3) strömenden Kältemittels misst.

9. Sensoranordnung (14) nach einem der Ansprüche 1 bis 8, wobei das Kältemittel Kohlendioxid ist.

10. Sensoranordnung (14) nach einem der Ansprüche 1 bis 9, wobei der Signalausgang (17) der Sensoranordnung (14) an einen Signaleingang einer separiert von der Sensoranordnung (14) angeordneten Steuerelektronik (18) angeschlossen ist.

11. Sensoranordnung (14) nach Anspruch 10, wobei die Steuerelektronik (18) einen Verdichter (2) der Fahrzeugklimaanlage (1) ansteuert.

12. Sensoranordnung (14) nach Anspruch 10 oder 11, wobei die Steuerelektronik (18) ein verstellbares Expansionsorgan (7) der Fahrzeugklimaanlage (1) elektrisch ansteuert.

13. Sensoranordnung (14) nach einem der Ansprüche 10 bis 12, wobei die Steuerelektronik (18) ein Entlüftungsorgan (13) ansteuert und das Entlüftungsorgan (13) öffnet, so dass Kältemittel in die Umgebung ausströmen kann, wenn die erste physikalische Größe (p) und das auf Basis der ersten physikalischen Größe (p) gebildete Sensorsignal (pₛ) einen vorgegebenen kritischen Wert (p₃) überschreitet.

## Claims

1. A sensor arrangement (14), especially vehicle air-conditioning systems (1), with a housing, with an electronics unit, a first sensor element (15), connected to the electronics unit, for measuring a first physical variable (p) and a second sensor element (16), connected to the electronics unit, for measuring a second physical variable (*θ*) are arranged, wherein the electronics unit has an electrical signal output (17) and an evaluation module,
**characterised in that**
• the sensor arrangement (14) is a sensor arrangement of a vehicle air-conditioning system (1),
• the evaluation module, as a function of momentary measured values of the physical variables (p, *θ*), in accordance with a specified selection logic ascertains which of the measured physical variables (p, *θ*) is to be regarded as a momentarily relevant variable, and which switches the sensor signal (ps) formed on the basis of the momentarily relevant variable (p, *θ*) to the signal output (17), and
• the second physical variable is a temperature (*θ*) and the second sensor element (16) is a temperature sensor which is provided for measuring a refrigerant temperature (*θ*) of the vehicle air-conditioning system (1).

2. A sensor arrangement (14) according to Claim 1, wherein the first physical variable is a pressure (p) and the first sensor element (15) is a pressure sensorwhich is provided for measuring a refrigerant pressure of the vehicle air-conditioning system (1).

3. A sensor arrangement (14) according to one of Claims 1 or 2, wherein the two physical variables (p, *θ*) are independent of one another.

4. A sensor arrangement (14) according to one of Claims 1 to 3, wherein a sensor signal (p_{S}) formed on the basis of the first physical variable (p) is always switched to the signal output (17) if the measured second physical variable (*θ*) is less than a specified lower limit value (*θ*₁) for the second physical variable (*θ*).

5. A sensor arrangement (14) according to one of Claims 1 to 4, wherein a sensor signal (p_{S}) formed on the basis of the second physical variable (*θ*) is switched to the signal output (17) if the first physical variable (p) is less than a specified lower limit value (p₁) for the first physical variable and if the second physical variable (*θ*) is more than a specified lower limit value (*θ*₁) for the second physical variable (*θ*) for at least a specified duration (tₘₐₓ).

6. A sensor arrangement (14) according to one of Claims 1 to 5, wherein a sensor signal (p_{S}) formed on the basis of the second physical variable (*θ*) is switched to the signal output (17) if the first physical variable (p) is less than a specified lower limit value (p₁) for the first physical variable and if the second physical variable (*θ*) is more than a specified upper limit value (*θ*₂) for the second physical variable (*θ*).

7. A sensor arrangement (14) according to one of Claims 1 to 6, wherein a sensor signal (p_{S}) formed on the basis of the first physical variable (p) is switched to the signal output (17) if the first physical variable (p) is more than a specified lower limit value (p₁) for the first physical variable (p) and if the second physical variable (*θ*) is less than a specified upper limit value (*θ*₂) for the second physical variable (*θ*).

8. A sensor arrangement (14) according to one of Claims 1 to 7, wherein the housing of the sensor arrangement (14) is connected to a fluid line (3) of the vehicle air-conditioning system (1) and measures the pressure (p) and the temperature (*θ*) of a refrigerant flowing in the fluid line (3).

9. A sensor arrangement (14) according to one of Claims 1 to 8, wherein the refrigerant is carbon dioxide.

10. A sensor arrangement (14) according to one of Claims 1 to 9, wherein the signal output (17) of the sensor arrangement (14) is connected to a signal input of control electronics (18) arranged separately from the sensor arrangement (14).

11. A sensor arrangement (14) according to Claim 10, wherein the control electronics (18) control a compressor (2) of the vehicle air-conditioning system (1).

12. A sensor arrangement (14) according to Claim 10 or Claim 11, wherein the control electronics (18) electrically control an adjustable expansion element (7) of the vehicle air-conditioning system (1).

13. A sensor arrangement (14) according to one of Claims 10 to 12, wherein the control electronics (18) control a venting element (13) and the ventilation element (13) opens, so that refrigerant can flow out into the environment if the first physical variable (p) and the sensor signal (p_{S}) formed on the basis of the first physical variable (p) exceed a specified critical value (p₃).

## Revendications

1. Dispositif de capteurs (14) destiné en particulier à des installations (1) de climatisation de véhicule comprenant un boîtier dans lequel sont montés un système électronique, un premier élément de capteur (15) relié au système électronique pour permettre de mesurer une première grandeur physique (p) et un second élément de capteur (16) relié au système électronique pour permettre de mesurer une seconde grandeur physique (ϑ), le système électronique comprenant une sortie de signal électrique (17) et un module d'exploitation,
**caractérisé en ce que**
- le dispositif de capteurs (14) est un dispositif de capteurs d'une installation de climatisation de véhicule (1),
- le module d'exploitation détermine, en fonction de valeurs de mesure instantanées des grandeurs physiques (p, ϑ) et conformément à une logique de sélection prédéfinie laquelle des grandeurs physiques mesurées (p, ϑ) doit être considérée comme grandeur instantanément pertinente, et branche sur la sortie de signal (17) un signal de capteur (pₛ) formé sur le fondement de la grandeur instantanément pertinente (p, ϑ), et
- la seconde grandeur physique est une température (ϑ) et le second élément de capteur (16) est un capteur de température qui permet de mesurer la température du fluide de refroidissement (ϑ) de l'installation de climatisation du véhicule (1).

2. Dispositif de capteurs (14) conforme à la revendication 1,
dans lequel
la première grandeur physique est une pression (p) et le premier élément de capteur (15) est un capteur de pression qui permet de mesurer la pression du fluide de refroidissement de l'installation de climatisation du véhicule (1).

3. Dispositif de capteurs (14) conforme à l'une des revendications 1 et 2,
dans lequel
les deux grandeurs physiques (p, ϑ) sont indépendantes l'une de l'autre.

4. Dispositif de capteurs (14) conforme à l'une des revendications 1 à 3,
dans lequel
on branche constamment sur la sortie de signal (17) un signal de capteur (pₛ) formé sur le fondement de la première grandeur physique (p) lorsque la seconde grandeur physique (ϑ) mesurée est inférieure à une valeur limite inférieure prédéfinie (ϑ₁) de cette seconde grandeur physique (ϑ).

5. Dispositif de capteurs (14) conforme à l'une des revendications 1 à 4,
dans lequel
on branche sur la sortie de signal (17) un signal de capteur (pₛ) formé sur le fondement de la seconde grandeur physique (ϑ) lorsque la première grandeur physique (p) est inférieure à une valeur limite inférieure (p₁) prédéfinie de cette première grandeur physique et que pendant au moins une durée prédéfinie (tₘₐₓ) la seconde grandeur physique (ϑ) est supérieure à une valeur de seuil inférieure prédéfinie (ϑ₁) de cette seconde grandeur physique (ϑ).

6. Dispositif de capteurs (14) conforme à l'une des revendications 1 à 5,
dans lequel
on branche sur la sortie de signal (17) un signal de capteur (pₛ) formé sur le fondement de la seconde grandeur physique (ϑ) lorsque la première grandeur physique (p) est inférieure à une valeur limite inférieure (p₁) prédéfinie de cette première grandeur physique et que la seconde grandeur physique (ϑ) est supérieure à une valeur de seuil supérieure (ϑ₂) prédéfinie de cette seconde grandeur physique (ϑ).

7. Dispositif de capteurs (14) conforme à l'une des revendications 1 à 6,
dans lequel
on branche sur la sortie de signal (17) un signal de capteur (pₛ) formé sur le fondement de la première grandeur physique (p) lorsque la première grandeur physique (p) est supérieure à une valeur limite inférieure (p₁) prédéfinie de cette première grandeur physique (p) et que la seconde grandeur physique (ϑ) est inférieure à une valeur supérieure (ϑ₂) prédéfinie de cette seconde grandeur physique (ϑ).

8. Dispositif de capteurs (14) conforme à l'une des revendications 1 à 7, dans lequel le boîtier du dispositif de capteur (14) est branché sur une conduite de fluide (3) de l'installation de climatisation du véhicule (1) et mesure la pression (p) et la température ϑ) du fluide de refroidissement circulant dans la conduite de fluide (3).

9. Dispositif de capteurs (14) conforme à l'une des revendications 1 à 8, dans lequel le fluide de refroidissement est du dioxyde de carbone.

10. Dispositif de capteurs (14) conforme à l'une des revendications 1 à 9,
dans lequel la sortie de signal (17) du dispositif de capteurs (14) est branchée sur une entrée de signal d'une électronique de commande (18) séparée du dispositif de capteur (14).

11. Dispositif de capteurs (14) conforme à la revendication 10,
dans lequel l'électronique de commande (18) commande un compresseur (2) de l'installation de climatisation (1) du véhicule.

12. Dispositif de capteurs (14) conforme à la revendication 10 ou 11,
dans lequel l'électronique de commande (18) commande électriquement un organe de détente réglable (7) de l'installation de climatisation (1) du véhicule.

13. Dispositif de capteurs (14) conforme à l'une des revendications 10 à 12 dans lequel l'électronique de commande (18) commande un organe de dégazage (13) et ouvre cet organe de dégazage (13) de sorte que le fluide de refroidissement puisse être évacué dans l'environnement lorsque la première grandeur physique (p) et le signal de capteur (pₛ) formé sur le fondement de cette première grandeur physique (p) dépassent une valeur critique (p₃) prédéfinie.
